# EUROPEAN PATENT APPLICATION

(11) **EP 0 557 571 A1**
(43) Date of publication of application: **01.09.1993**
(21) Application number: 92110063.2
(22) Date of filing: 15.06.1992
(51) Int. Cl.: G11B 23/087, G11B 15/07, G11B 5/41

(54) **Cleaning cartridge designed for automatic operations**

(30) Priority: 24.02.1992 US 840081
(71) Applicant: TANDBERG DATA A/S, 0808 Oslo 8 (NO)
(72) Inventor: Solhjell, Erik, N-00855 Oslo 8 (NO)
(74) Representative: Goddar, Heinz J., Dr.

(57) **Abstract**

A one-quarter inch cartridge (18) is designed to be uniquely differentiated from a standard tape cartridge by having a cartridge in place area (19) removed (open) while at a same time, a write protect area (22) is closed. The uniquely differentiated tape cartridge is preferably a cleaning tape cartridge. The drive which receives the standard tape cartridge can differentiate or identify the cleaning cartridge with the cleaning cartridge designed as indicated. In a stacker or autoloader system, the uniquely identified cartridge, which is preferably a cleaning cartridge, can be easily located and loaded automatically. If the drive has a detection system for different locations of the cartridge-in-place area, then at each location for a cartridge-in-place area, the area has no sensing surface. It is not necessary to make mechanical changes to the drive for detection of a cleaning cartridge, and the design of the cleaning cartridge is simplified for unique identification thereof.

## Description

### BACKGROUND OF THE INVENTION

The present invention relates to tape cleaning cartridges, and more particularly for 1/4" tape.

Tape drives using 1/4" tape cartridge have become very popular in the market place. Large numbers of such tape drives are sold every year, and performance is improved constantly. That includes increasing the number of recorded tracks on a tape and also the recording density.

These technology enhancements increase the risk of read or write problems due to particles (dust etc.) accumulating on the read/write head. These particles may come from the tape itself, from internal areas of the cartridge, or from the surrounding air, including human debris. With each track becoming narrower and narrower and the linear recording density increasing dramatically, dust particles which previously were too small to cause any problems may now become very significant. During write operations, accumulated particles on the recording head may prevent the drive from writing the data correctly (write error). When reading, these particles stuck on the head may prevent proper read operations (read error).

To reduce these problems, the industry several years ago developed special cleaning cartridges in order to clean the head properly. Although the actual design may vary, the basic principle of all these cartridges is the same: The cartridge is inserted into the tape drive. The drive detects that a cartridge is loaded. A software command is issued from the host to the drive which initiates the start of a tape move operation inside the drive (drive capstan is started). The running capstan wheel is driving the cleaning cartridge mechanism which moves a cleaning tape or cleaning pad over the head.

Normally, drives are not designed with special commands to start a cleaning operation (although that is possible and has been done previously). However, it is not necessary to have such special commands. Any tape movement command (Move Tape Forward, Move Tape Reverse, Initialize Tape, Read Tape or Write Tape) will work. The drive will sense that a tape cartridge is inserted and after receiving the command, will start the capstan motor in order to move the tape. The drive will then always look for BOT (Beginning Of Tape) or EOT (End Of Tape) holes at each end of the tape in order to determine the exact tape locations. Since the cleaning cartridge has no such tape holes, the BOT and EOT indicators will never occur. The drives are normally designed to time out after a certain maximum time if BOT or EOT is not detected. Typically, this time is anywhere from 30 seconds to 2 minutes.

Thus, by inserting a cleaning cartridge and issuing any type of tape movement command, the cleaning operation will run for the time specified as the BOT or EOT "not found" time-out time in the drive. The drive will then issue an error command (since BOT or ECT was not found), and the user may remove the cleaning cartridge and insert a normal tape cartridge. The read or write operation may then continue with a cleaned head.

This automatic initialization mode may also he used to run a cleaning cartridge without a starting command from the host computer. Drives designed with this feature will automatically detect that a cartridge is inserted since they cannot distinguish the cleaning cartridge from a standard cartridge. Thus they start the tape moving operation, regardless of whether the inserted cartridge is a standard cartridge or a cleaning cartridge. The operation is then the same as previously described. The drive will first try to move the tape in a forward mode. After a certain time has elapsed without any detection of an EOT marker hole, the drive will either terminate the operation with an error status or reverse the tape direction. In the latter case, the drive will again time out after a drive predefined time (because no BOT marker holes are detected), and an error message is transferred back to the host.

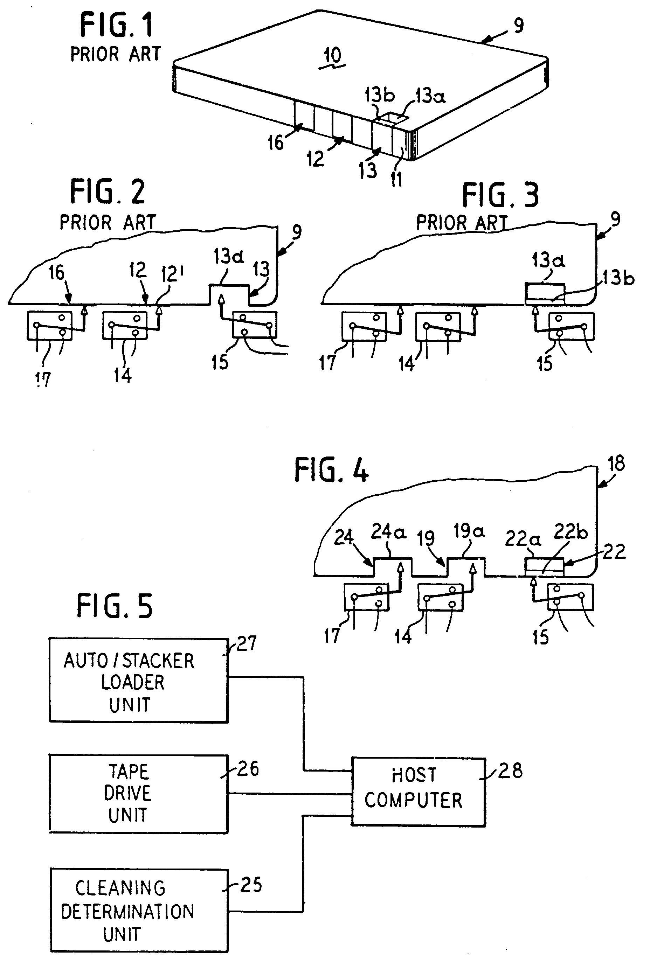

The previous 1/4" tape cartridges such as shown at 9 in Figure 1 are designed so that a drive immediately detects when a cartridge is inserted. Figure 1 shows how this is done. One corner 11 of the cartridge housing 10 is designed as a detection area. It contains a plain area 12 which can be sensed by a sensor (typically a mechanical switch such as 14 in Fig. 2) in the drive. This area 12 is named the "Cartridge in Place" sense area. Close to this area is another defined area 13 used to sense if the cartridge is write protected or not. This is named the "Cartridge Write Protect" sense area. The Write Protect sense area 13 is designed in such a way that the drive can detect whether no opening is present (a front detection surface 13b is in place - see Figs. 1 and 3) or is present (a notch region 13a is exposed with the front detection surface 13b removed or slid out of position - see Fig. 2). This removal of surface 13b is accomplished by a known mechanical rotating or sliding mechanism, for example by making front detection surface 13b slidable so as to expose the open notch region 13a. By either rotating or sliding this surface on the cartridge housing, the user can place the cartridge in "Write Permit Mode" (switch 15 in Fig. 3 is closed so that the sense area is unbroken with front detection surface 13a in place) or "Write Protect" mode (switch 15 is open in Fig. 2 so that there is an aperture in the sense area, with surface 13a removed).

Known drives are therefore typically equipped with two mechanical sensors or switches 14 and 15 as shown in Figure 2. Switch 14 is for sensing whether the cartridge 9 is in place, and switch 15 detects if the cartridge 9 is in the write permit or the write protect mode. Figure 2 shows the basic principle with a cartridge 9 inserted and in the write protect mode with detection surface 13b removed or slid or rotated out of position. Figure 3 shows the cartridge 9 inserted and in the write permit mode with detection surface 13b in place.

The cartridge design may vary to some extent, but all cartridges have at least one permanent (closed) area 12 which is used to detect that a cartridge is inserted, and one area 13 which is used for write protection control and which is set to either open or closed. The drives are always designed to detect whether a cartridge is inserted by sensing a status of the "cartridge in place" switch 14 in the drive. If the switch 14 is not activated (open), no cartridge is inserted. A closed switch 14 shows that a cartridge is inserted. The drive may then determine if the cartridge is in write permit or write protect mode by sensing on the write protect switch 15. A closed switch 15 indicates write enable (write permit), an open switch indicates write protect mode (no writing permitted).

Currently the cleaning cartridges are designed in the same way. The Cartridge in Place Area 12 is always covered by a front detection surface 12' (closed) so that the drive Cartridge in Place switch 14 will be activated in exactly the same way as when a normal tape cartridge is inserted. Normally, cleaning cartridges are designed with the Write Protect Switch area 13 open to prevent the drive from trying to execute a write command (although no harm would occur if that should happen).

For many applications, this scheme works. However, applications exist where it would be beneficial to see an improvement compared to the scheme described above. Some computer systems may not want to receive an error message from the drive at the end of the cleaning operation (because the drive could not find the expected BOT/EOT holes in time during the predetermined timeout time). Therefore, some users would like to have the drive able to uniquely detect whether a cleaning cartridge or a standard tape cartridge is inserted. Additionally, special Stacker and Autoloader systems are now becoming available where the ability to differentiate between a standard cartridge and a cleaning cartridge is highly desirable. (A Stacker or an Autoloader is a system which contains one or more drives being fed with cartridges from a special cartridge magazine containing a specified number of cartridges. Typically, a Stacker system contains one tape drive and a cartridge magazine with from 6 to 16 tape cartridges. The magazine can be moved so that each of the cartridges one at a time can be automatically inserted or withdrawn from the drive. An Autoloader operates normally in the same way, but with much larger magazines, containing typically from 50 to several thousands of cartridges. Autoloaders may also be equipped with more than one tape drive (for redundancy and speed)).

These Stackers/Autoloaders normally operate automatically (controlled from the computer) with none or very little operator interference. To avoid the requirement of an operator to perform a cleaning operation, many users insert a cleaning cartridge in one of the slots in the cartridge magazine. By moving the magazine to this position, the cleaning cartridge may be inserted and the cleaning operation executed without any operator interference.

However, it would still be desirable to design the cleaning cartridge to uniquely define it as a cleaning cartridge and not a standard cartridge. The drive may then be able to report back to the host that a correct cleaning cartridge operation has been performed. The drive may then also be designed with an optimum running time for the cleaning operation, independently of any other internally defined time-out sequences.

The actual area 12 set aside for detection by the Cartridge in Place switch 14 and the area 13 set aside for the Write Protect Switch 15 may vary with cartridge type. However, all cartridges on the market today have the same basic design: One predefined permanent area ("Cartridge in Place" area 12) which is used to detect that a cartridge is inserted in the drive ("Cartridge in Place" detection) and one area 13 which may be either open or closed and which is used to indicate write protect or write permit status of the cartridge. The two sensors typically built into the known drives may then show the following different combinations ("0" means not activated switch, "1" means activated switch):

| Status | Cartridge in Place Switch | Write Protect Switch |
|---|---|---|
| No cartridge inserted | 0 | 0 |
| Write protected cartridge inserted | 1 | 0 |
| Non-write protected cartridge inserted | 1 | 1 |

The physical position of the "Cartridge in Place" Area may vary, depending upon cartridge type (and size). Some drives may be designed to allow cartridges with different locations for the "Cartridge in Place" Area and the Write Protect Area to be used in the drive. This requires more sensors to be built into the drive, to cover the different types of cartridges. Assuming for example two different possible "Cartridge in Place" locations such as shown at 12 and 16 (heavier lines between slash marks) in Figure 2, a drive will then need three (mechanical) sensors (such as 14, 15, and 17 in Figure 2) and the different combinations will be as follows:

| Status | No. 1 Cartridge in Place Switch | No. 2 Cartridge in Place Switch | Write Protect Switch |
|---|---|---|---|
| Cartridge not inserted | 0 | 0 | 0 |
| Write Protected Cartridge type 1 inserted | 1 | 0 | 0 |
| Write Protected Cartridge type 2 inserted | 0 | 1 | 0 |
| Non-Write protected Cartridge type 1 inserted | 1 | 0 | 1 |
| Non-Write protected Cartridge type 2 inserted | 0 | 1 | 1 |

It is possible to design other cartridge types in the future where the "Cartridge in Place" area and/or the write protect area are moved to yet other location(s). This would require one or more additional sense switches in the drive and the combination table would just be increased accordingly.

A cleaning cartridge different from the standard cartridge and having, for example, another opening or hole in the cartridge housing could be provided. By having another sensor in the drive sensing on the presence of this hole, the drive could differentiate between the standard cartridge and the cleaning cartridge.

### SUMMARY OF THE INVENTION

It is an object of this invention to perform the task of uniquely detecting whether a cleaning cartridge is present rather than a standard cartridge, without the requirement of any mechanical changes to the drive itself (no additional sense switches).

According to the invention, a tape cartridge is uniquely differentiated from a standard tape cartridge by having a "Cartridge in Place" area removed (open), while at a same time, the "Write Protect/Permit" area is closed. If the drive with which the tape is used has a plurality of "Cartridge in Place" areas, then all of the areas are removed (open), while at the same time, the "Write Protect/Permit" area is closed. The tape cartridge is preferably a cleaning cartridge which can then be identified in accordance with the invention and differentiated from a standard tape cartridge. In another development of the invention, the differentiation between a standard cartridge and a cleaning cartridge is employed in a stacker and/or autoloader system so that such a system can readily identify the cleaning cartridge.

With the invention, it is not necessary to make mechanical changes to the drive itself, and the modification of the cleaning cartridge is minimal compared to prior known cleaning cartridges. No additional sense switches ore required, for example.

With the invention, an optimum running time for cleaning may be defined, independently of any other internally defined time-out sequence. There is also the possibility made available that the drive may be able to report back to the host that a correct cleaning cartridge operation has been performed.

In a further development of the invention, in a stacker or autoloader system, with the invention the cleaning cartridge can be easily identified and located from among a plurality of cartridges. The selection of the cleaning cartridge can occur after a certain parameter is reached such as a number of tape running operations, specified number of running hours, when the number of soft write or read errors exceed a certain limit, or when hard write or read errors occur based on a predefined limit.

### BRIEF DESCRIPTION OF THE DRAWINGS

Figure 1 is a perspective view of a known cartridge having a Write Protect sense area and a Cartridge in Place sense area;
Figure 2 is a fragmentary top view of the cartridge of Figure 1 together with known Cartridge in Place and Write Protect sense switches adjacent to the cartridge detection areas, and wherein the Cartridge in Place areas are closed and the Write Protect area is open;
Figure 3 is a fragmentary top view of the known system shown in Figure 2 but with the Write Protect sense area open indicating that writing is permitted, opposite to the condition shown in Figure 2 with the write sense area open and thus write protected;
Figure 4 is a fragmentary top view of the cartridge of the invention having the Cartridge in Place sense area open and the Write Protect area closed for uniquely defining a cartridge, such as a cleaning cartridge according to the invention; and
Figure 5 is a block diagram showing an auto-stacker/loader unit containing the uniquely differentiated tape cartridge such as a cleaning cartridge together with standard cartridges for automatically loading cartridges into the tape drive unit, and also a cleaning determination unit, all connected to a host computer.

### DESCRIPTION OF THE PREFERRED EMBODIMENTS

The important point is that all cartridges and drives are designed to detect that a cartridge is in place by sensing that the proper sense switch in the drive is activated. When the drive senses that the Cartridge in Place switch 14 is activated (or one of them in the case of two or more, such as switches 14 and 17 in Figure 2), it will assume that a normal cartridge 9 is inserted and start operation (by normally first testing for the write protect status).

The idea behind the invention is to redesign the housing of the cleaning cartridge 18 as shown in Figure 4 so that the "Cartridge in Place" area 19 (or alternative area 24) is always open (recesses 19a and 24a are provided), while simultaneously the Write Protect switch area 22 is closed, as shown by detection surface 22b being in place (cartridge not Write Protected). Logically, this is the same as defining a cartridge which is Write Enabled, but not In Place. As can be seen from the preceding tables, this is an undefined and unused combination, as today's cartridges when inserted, always activate at least one "Cartridge in Place" sensor switch.

Therefore, in the preceding tables, this redesigned cleaning cartridge 18 will give the following status:

| Status | Cartridge in Place Switch 14 | Write Protect Switch 15 |
|---|---|---|
| Cleaning Cartridge with new designed housing inserted | 0 | 1 |

Drives designed with two "Cartridge in Place" Sensor switches 14 and 17:

| Status | No. 1 Cartridge in Place Switch 14 | No. 2 Cartridge in Place Switch 17 | Write Protect Switch 15 |
|---|---|---|---|
| Cleaning Cartridge with new designed housing inserted | 0 | 0 | 1 |

Note that in the case of drives designed to accept cartridges with one of two (or more) different locations for the "Cartridge in Place" switch area, both areas 19 and 24 (or all in the case of more than two) must be designed as "open" in order to give a uniquely defined cartridge status to the drive. This is accomplished by providing a recess 19a or 24a, without any front detection surface.

Thus, by designing a cleaning cartridge with an open Cartridge in Place area 19 (or areas 19 and 24) so that the drive Cartridge in Place sensor(s) 14 and 17 are not activated but with the Write Protect area 22 closed with detection surface 22b in place so that the Write Protect Switch 15 is activated, the drive can easily be made to detect the difference between a cleaning cartridge 18 and any kind of standard cartridge 9 without any mechanical changes to the drive itself. Of course, no recess 22a needs to be provided at all on cleaning cartridge 18, as long as a closed front detection surface 22b is provided. Typically, the only modification which needs to be made to the drive is to add to the internal cartridge detect system the possibility of a Writing Permitted (Enabled) status with no Cartridge in Place switch 14 or 17 activated. This can normally easily be done by modifying the internal built-in drive control program (which is running the built-in microcontroller(s) or micro-processor(s) typically found in all 1/4" tape drives) to enable the acceptance of this new cartridge status.

The drive may then be designed to utilize the information that a special cleaning cartridge is loaded by executing a special cleaning cartridge operation optimized for the particular cleaning requirements. This may include special combinations of forward and reverse tape running modes, the time the cartridge is kept running, etc. Additionally, the drive may be designed to report that a cleaning cartridge has been loaded, and also to report when a cleaning cartridge operation has been completely executed.

In a further development of the invention, the unique identification system of the invention is employed in a stacker or autoloader system for locating the unique cartridge such as the cleaning cartridge from among a group of cartridges. Furthermore, in a further development of the invention, the identification system of the invention for identifying the cleaning cartridge can be enabled after a certain number of tape running operations, after a specified number of running hours, when the number of soft (recoverable) write or read errors exceed a certain specified limit, or when hard (unrecoverable) write or read errors occur. Also, the identification system of the invention can be enabled, given a combination of the above parameters attaining certain values.

As shown in Figure 5, the above criteria for determining when a cleaning operation is to be initiated is determined by the cleaning determination unit 25. This cleaning determination unit 25 is simply a processor unit or logic circuitry which determines when one or more of the above discussed criteria occurs for initiating selection and/or insertion of the cleaning tape cartridge into the tape drive unit 26. It thus may have a variety of designs, and thus no particular design is disclosed herein since the actual selection criteria and software implementation is not part of this invention.

The uniquely differentiated cleaning tape cartridge such as 18 shown in Figure 4, together with a plurality of standard tape cartridges 9 may be contained in a magazine of an auto loader or stacker unit 27, well known to those skilled in the art. When the cleaning determination unit 25 determines that cleaning is to occur, the cleaning cartridge is then selected and automatically loaded from the unit 27 into the tape drive unit 26. Overall control is achieved by a host computer 28 for the various operations discussed previously.

The host computer 28, of course, and/or the cleaning determination unit 25, can define a specific cleaning sequence once the cleaning cartridge has been inserted. Also, different types of cleaning cartridges can be provided and automatically selected depending on the cleaning criteria or parameters discussed above.

Although various minor changes and modifications might be proposed by those skilled in the art, it will be understood that I wish to include within the claims of the patent warranted hereon all such changes and modifications as reasonably come within my contribution to the art.

The features disclosed in the foregoing description, in the claims and/or in the accompanying drawings may, both, separately and in any combination thereof, be material for realising the invention in diverse forms thereof.

## Claims

1. A cleaning cartridge for cleaning at least one part in a tape drive for receiving a tape cartridge wherein said cleaning cartridge has a cartridge-in-place detection area which is open and a write-protect area which is closed.

2. A tape cartridge system, comprising:
a cartridge which is to be uniquely identified relative to a standard tape cartridge, both the standard tape cartridge and uniquely identified cartridge having a cartridge-in-place area for determining when a cartridge is in place and a write-protect area for determining whether or not the standard tape cartridge is to be write protected;
a drive means for receiving and playing from and recording on the standard tape cartridge, said drive means having cartridge-in-place sensor means for sensing at said cartridge-in-place area to determine whether a standard tape cartridge is in place, and having write-protect sensor means for detecting at said write-protect area whether or not to write protect the standard tape cartridge;
said standard tape cartridge having said cartridge-in-place area closed with a sensing surface and said write-protect area having a sensing surface which is removable from being sensed by said write-protect sensor means when write protection is desired and which is detected as being present when writing is permitted; and
said uniquely identified cartridge having no sensing surface at said cartridge-in-place area so that said cartridge-in-place sensor means indicates that no standard cartridge is present and said write-protect area having a sensing surface present for detection by said write-protect sensor means indicating a writing permitted mode of a standard cartridge.

3. A system according to claim 2 wherein said cartridge-in-place sensor area of said uniquely identified cartridge comprises a recess with said sensing surface in front of the recess at a wall of said cartridge and said cartridge-in-place area has the sensing surface removed so that a recess is exposed to said cartridge-in-place sensor means and is designated as open, said write-protect area being designated as either open or closed depending on whether the sensor surface is present.

4. A cartridge system according to claim 2 wherein said standard tape cartridge is a 1/4" tape cartridge.

5. A cartridge system according to claim 2 wherein said uniquely identified cartridge comprises a cleaning cartridge for cleaning at least one part of the tape drive.

6. A cartridge system according to claim 2 wherein the tape drive has at least two cartridge-in-place sensor means for detecting presence of the cartridge-in-place sense area on a standard tape cartridge at two different optional locations, and said uniquely identified cartridge has two cartridge-in-place areas without sensor surfaces so that the corresponding drive cartridge-in-place sensor means do not detect said sensor surfaces.

7. A cartridge system according to claim 6 wherein said uniquely identified cartridge is a cleaning cartridge.

8. A cartridge system according to claim 2 wherein said tape drive has means for detecting the uniquely identified tape cartridge based on absence of the sensor surface at said cartridge-in-place area while at a same time detecting a presence of said write-protect sensor surface.

9. A cartridge system according to claim 8 wherein said uniquely identified cartridge comprises a cleaning cartridge.

10. A cartridge system according to claim 7 wherein said uniquely identified cartridge comprises a specially defined cleaning cartridge and said tape drive has means associated with it for defining a cleaning sequence which is optimized to achieve a best cleaning performance, said cleaning sequence being automatically executed each time said means for detecting detects that the cleaning cartridge is inserted.

11. A cartridge system according to claim 8 wherein a host computer is connected to said tape drive, and said tape drive has means for reporting a message to said host that a special cleaning cartridge has been inserted therein.

12. A cartridge system according to claim 8 wherein said uniquely identified cartridge comprises a cleaning cartridge and wherein said drive means has associated with it means for providing a special cleaning sequence optimized to achieve best cleaning performance, which cleaning sequence is automatically executed when the means for detecting detects the cleaning cartridge is inserted in the drive means and when the drive means receives a command from a host computer to initiate a cleaning operation.

13. A cartridge system according to claim 2 wherein said tape drive means has connected to it a multiple cartridge loading means containing at least one magazine having a plurality of cartridges at least one of which is a special cleaning cartridge, said cleaning cartridge being said uniquely identified cartridge.

14. A cartridge system according to claim 13 wherein said multiple cartridge loading means includes means for inserting the special cleaning cartridge into the tape drive upon command.

15. A cartridge system according to claim 14 wherein the command for the special cleaning cartridge is provided from a host computer for executing a cleaning operation.

16. A cartridge system according to claim 2 wherein said uniquely identified cartridge comprises a cleaning cartridge, and said drive means has cleaning determination means attached thereto for determining when a cleaning operation is required.

17. A cartridge system according to claim 16 wherein an automatic cartridge loading means is provided having a magazine containing a plurality of tape cartridges and said at least one cleaning cartridge, and said cleaning determination means provides a command to said automatic cartridge loading means for selecting and loading said at least one cleaning cartridge.

18. A cartridge system according to claim 16 wherein said cleaning determination means determines a need for cleaning based on a number of operations which have occurred on standard cartridges since a last performed cleaning operation.

19. A cartridge system according to claim 16 wherein said cleaning determination means determines a need for cleaning based on occurrence of a number of write errors corresponding to failed write operations exceeding a predefined limit during a write data operation.

20. A cartridge system according to claim 16 wherein said cleaning determination means determines need for a cleaning operation based on occurrence of a number of read errors corresponding to failed read operations exceeding a predefined limit during a read data operation.

21. A cartridge system according to claim 16 wherein said cleaning determination means determines a need for cleaning based on measuring a number of operation hours since the last cleaning operation was performed.

22. A cartridge which is uniquely differentiated from a standard tape cartridge, wherein said standard tape cartridge has a cartridge-in-place area with a sensing surface and a write-protect area also with a sensing surface positioned on the cartridge such that said sensing surfaces can be detected by corresponding sensors in a tape drive which receives the tape cartridge, comprising:
said uniquely differentiated cartridge being dimensioned to also be receivable in said tape drive and having a cartridge-in-place area at a same location as said standard tape cartride but without a sensing surface; and
said uniquely differentiated cartridge also having a write-protect area at a same location as said standard tape cartridge and wherein said write protect area has a sensor surface in place for sensing by the corresponding tape drive sensor.

23. A cartridge according to claim 22 wherein said cartridge is a 1/4" tape cartridge.

24. A cartridge according to claim 22 wherein said cartridge is a cleaning cartridge.

25. A cartridge according to claim 22 wherein said cartridge-in-place area comprises a recess without any front sensing surface and is thus open.

26. A tape cartridge system, comprising:
a cartridge which is to be uniquely identified relative to a standard tape cartridge, both the standard tape cartridge and uniquely identified cartridge having a cartridge-in-place area for determining whether a cartridge is in place and a write-protect area for determining whether or not the cartridge is to be write protected;
drive means for receiving and playing from and recording on the standard tape cartridge and for also receiving the uniquely identified cartridge, said drive means having cartridge-in-place sensor means for sensing at said cartridge-in-place area to determine whether a standard tape cartridge is in place, and having write-protect sensor means for detecting at said write-protect area whether or not to write protect the standard tape cartridge; and
said uniquely identified cartridge having its cartridge-in-place area structured to indicate no cartridge in place and said write-protect area being structured to indicate no write protect.
